# EUROPEAN PATENT SPECIFICATION

(11) **EP 4 586 864 B1**
(45) Date of publication and mention of the grant of the patent: **08.04.2026**
(21) Application number: 23772259.0
(22) Date of filing: 15.09.2023
(51) Int. Cl.: A47J 31/46, A47J 31/60

(54) **BEVERAGE DISPENSING MACHINE AND METHOD FOR CONTROLLING THE SAME**
GETRÄNKEAUSGABEMASCHINE UND VERFAHREN ZUR STEUERUNG DAVON
MACHINE DE DISTRIBUTION DE BOISSONS ET SON PROCÉDÉ DE COMMANDE

(30) Priority: 16.09.2022 EP 22196201; 16.09.2022 EP 22196205
(43) Date of publication of application: 23.07.2025
(73) Proprietor: Société des Produits Nestlé S.A., 1800 Vevey (CH)
(72) Inventor: PUGLIESE, Alexandre, 1094 Paudex (CH); FERRAND, Mickael, 1807 Blonay (CH); NIEDERMANN, Christof, 9542 Münchwiller (CH); CADUFF, Marco, 8400 Winterthur (CH)
(74) Representative: Pasquino, Fabio
(86) International application number: PCT/EP2023/075542
(87) International publication number: WO 2024/056903

(56) References cited:
- EP-A1- 2 208 452
- DE-A1- 102013 107 077
- US-A1- 2009 038 655
- US-A1- 2019 069 713

## Description

### 1. Field of the invention

The present invention is directed to a beverage dispensing machine for dispensing a (comestible) liquid or beverage, like water, flavoured water, enriched water, coffee, tea, soup, and the like. The invention is further directed to a method for controlling the beverage dispensing machine particularly for cleaning purposes.

### 2. Technical background

Beverage dispensing machines are generally known in the prior art. With these machines, a liquid is delivered through the machine to be dispensed at a dispensing outlet. The liquid may be tempered (e.g. chilled or heated) before being dispensed. The liquid may interact with a comestible product to prepare a particular beverage product or other liquid comestible, like coffee, tea or soup. The liquid may also interact with the comestible product to be enriched or flavoured before being dispensed. The liquid may be delivered through a beverage preparation unit for interacting with the comestible product. Therefore, the comestible product can be carried in a capsule or other type of recipients, which can be selectively placed in the beverage preparation unit so as to allow the liquid enter the capsule for interaction of the liquid with the comestible product.

For hygienic reasons and also allowing a proper functioning of the beverage dispensing machine, the delivery path along which the liquid or produced beverage is delivered is cleaned betimes and preferably on a regular basis. Most of the cleaning in place methods (CIP) are usually based on chemicals and/or require spare parts to be cleaned or changed on a regular basis. Users often need to follow a complex procedure to activate the cleaning process.

Furthermore, in case the beverage dispensing machines is intended to deliver chilled liquid or beverage, additional cleaning processes are required. The sanitization of the beverage dispensing machine needs to be done from the liquid inlet (in the beverage dispensing machine) to the beverage dispensing outlet. The document DE 10 2013 107077 A1 discloses a beverage dispensing machine with a cleaning arrangement.

### 3. Summary of the invention

It is thus an object of the present invention to provide a beverage dispensing machine and a method for controlling the same which allow for an easy and proper cleaning of the beverage dispensing machine and preferably the complete delivery path of the beverage dispensing machine.

This object is achieved by the subject-matter of the independent claims. The dependent claims study further the central idea of the present invention.

According to an aspect, the present invention is directed to a beverage dispensing machine comprising a delivery path. The delivery path comprises a delivery unit for delivering a liquid through the beverage dispensing machine, e.g. via fluid lines or piping of the delivery path. Moreover, the delivery path comprises a dispensing unit for dispensing the delivered liquid. The beverage dispensing machine further comprises a detector for detecting a cleaning command. Additionally, the beverage dispensing machine comprises a control unit configured to activate (i.e. initiate and carry out) a cleaning process based on detection of a cleaning command by or via the detector. The cleaning process comprises delivery of the liquid along the delivery path.

As the beverage dispensing machine allows for activating a cleaning process or cleaning cycle based on the detection of a cleaning command, cleaning can be automatically initiated without further intervention of a user. Hence, a user does not need to remember or follow a complex procedure to activate the cleaning process. As the cleaning command itself is what is detected by the detector, the beverage dispensing machine receives the required command or even additional information to activate the cleaning process preferably by the mere detection and thus in a simplified manner. Hence, the overall cleaning process can be facilitated and made more reliable and foolproof for a user. Also, as the cleaning process can be automatically started by simply detecting the cleaning command, no further manual intervention (e.g. pressing buttons, selecting cleaning process from a menu, e.g., via a touch display, etc.) by a user is required so that also the risk of cross-contamination can be minimized.

In the context of the present invention, the term "cleaning" may preferably encompass rinsing, purging, cleaning, descaling, sanitizing, and every other type of cleaning. Hence, a "cleaning liquid" can be any type of liquid for improving the machine's cleanliness, like heated/hot liquid, water, descaling agent, sanitizer, disinfectant, etc.

In the context of the present invention, the term "cleaning command" my preferably encompass any type of detectable feature as long as it can be identified as such by a corresponding detector and preferably to allow for the control unit be activated accordingly. In this regard, the cleaning command can, for instance, simply be the (physical) presence of an element in the sensing area of the detector. The cleaning command may also be a structural or functional information to be detected by the detector, like a contour of an element, a colour, a readable and preferably coded information carried on a chip or another element and the like. The cleaning command may also be a (coded) control command to be implemented in the control unit via the detector or simply activating a cleaning sequence be stored on the control unit when being detected by the detector. The present invention, however, is not limited to the type of cleaning command.

The delivery path further comprises an inlet for feeding a liquid to the delivery unit. Hence, an easy and reliable feature is provided to allow for any desired way of and source for feeding liquid (e.g. from outside the machine) to the delivery path. Hence, sufficient liquid for dispensing a beverage or cleaning liquid for carrying out the cleaning process can be supplied/fed.

The detector may be a presence sensor, an optical detector, like a barcode reader, and/or a code reader, like an RFID code reader, etc. By the detector being a presence sensor, the mere presence of a feature or an element, e.g. being placed in front of the detector, may be detected as the cleaning command to thus easily activate the cleaning process. The detector may also be an optical detector or sensor, like a barcode reader or a camera, for detecting presence, position, type, form, dimensions, code, and the like of the cleaning command or an element carrying the same, and thus provides a quite sophisticated sensor means for detecting the cleaning command and activating the cleaning process for improved cleaning results. The detector being a code reader may allow for detecting a defined code, e.g., carried on an element (like a smartphone) so that the code can be implemented in the system (e.g. the control unit) or is simply recognized to activate the cleaning process. The code reader may, for instance, be an RFID reader while the cleaning command can be stored on an RFID tag or RFID chip. Also, other and preferably wireless cleaning commands may be provided in any possible way to be detected by the detector to activate the cleaning process.

The beverage dispensing machine further comprises a cleaning path which selectively fluidly connectable to the delivery path to form a closed circulation loop. The selective provision of a closed cleaning circulation loop allows for an easy circulation of a cleaning liquid and thus an efficient cleaning of the beverage dispensing machine. As the circulation loop allows for a closed circulation of cleaning liquid, only a reduced amount of such cleaning liquid is required compared to machines cleaning along an open delivery path.

The cleaning path may comprise an integrated cleaning line. Hence, the closed circulation loop can be easily created or formed inside the machine without the risk of interference with a user. The beverage dispensing machine preferably further comprises valves for selectively fluidly connecting the cleaning line to the delivery path to form the closed circulation loop. This allows for a simple means to create or form the closed circulation loop for easily cleaning the machine. Also, the use of valves allows for a repeatedly reliable selective connection of the respective delivery routes, namely the delivery path and the cleaning line of the cleaning path.

The beverage dispensing machine further comprises a removable connector (also referred as connector), e.g. in the form of a jug, which may be fluidly connectable to the dispensing unit for receiving the delivered liquid during the cleaning process, i.e. the removable connector may be directly connected to the beverage dispensing machine delivery path on the inlet and on the beverage dispensing outlet. Such a connector allows for a secure collection of the dispensed cleaning liquid. Thus, a risk for a user to get in contact with the cleaning liquid is minimized while removal of the cleaning liquid, e.g. after having finished the cleaning process, is facilitated.

The connector is designed for fluidly connecting the dispensing unit and the inlet of the delivery path, if these are present, as the cleaning path to form the mentioned closed circulation loop with the delivery unit for circulating the liquid along the delivery path.

The proposed removable connector allows processing full sanitization of the beverage dispensing machine i.e. from the liquid inlet (in the delivery path of the beverage dispensing machine) to the beverage dispensing outlet with a closed circulation loop. The user does not need to intervene during the process that may be done using hot and/or chemical cleaning liquid products.

The connector thus preferably allows for (externally) shortcutting the outlet (i.e. dispensing unit) and the inlet of the delivery path. Hence, the preferred closed circulation loop can be easily created/formed by a very simple and handy means, namely the removable connector, while allowing for a proper cleaning of the beverage dispensing machine. The completion of the closed circulation loop via the dispensing unit on the one hand and the inlet on the other hand results in the delivery path including the inlet, the delivery unit and the dispensing unit (outlet) being part of the closed circulation loop, which are thus positioned completely along the cleaning path. Moreover, as a closed circulation loop is created by fluidly connecting the removable connector to the delivery path, any cleaning liquids including dirt and pollutant remain within this closed loop thus avoiding any release thereof. Thus, a risk for a user to come into contact with the cleaning liquid is minimized. As well as the risk of cross-contamination can be minimized. Hence, with a very simple means, namely the removable connector, the given beverage dispensing machine can be used for a simplified but proper cleaning of the complete beverage dispensing machine. Additionally, the connector may preferably be used with already existing beverage dispensing machines, which can thus be easily retrofitted.

The connector may comprise a space for carrying an amount of liquid and this preferably along the closed circulation loop when being fluidly connected with or to the delivery path. Hence, the connector may be used to flush cleaning liquid into the space at the end of a cleaning process to thus allow for an easy removal of the complete cleaning liquid. Removal of the cleaning liquid is thus facilitated and cross contamination can be minimized. Also, in case of forming the closed circulation loop along the connector - and its space - the cleaning liquid can be carried along with the connector so that enough cleaning liquid is present for a cleaning process when the connector is fluidly connected to the delivery path.

The connector may comprise an inlet port for fluid connection with or to the dispensing unit. Hence, a defined connection with the connector on the side of the dispensing unit can be easily provided to obtain a secure fluid connection between the removable connector and the dispensing unit. The connector may further comprise an outlet port for fluid connection with or to the inlet, if desired. Hence, a secure fluid connection of the connector with or to the inlet can be obtained to thus form the closed circulation loop in an easy and secure manner.

The connector may carry readable and preferably coded information comprising the cleaning command, i.e. about a cleaning process to be carried out by the beverage dispensing machine and/or the starting the by the beverage dispensing machine once the closed circulation loop with the beverage dispensing machine is formed. The connector may thus be the element along which the cleaning command is provided. Hence, an automatic or at least facilitated activation of a corresponding cleaning process is obtained by simply providing the connector.

The delivery unit comprises a storage tank for carrying an amount of liquid to be delivered to the dispensing unit. Preferably, the storage tank is fed via the inlet with the liquid. Hence, a self-sustaining stand-alone machine can be provided which carries sufficient liquid, e.g., for a plurality of beverage dispensing requests or even for cleaning cycles.

The delivery unit may comprise cooling means for cooling the liquid. The liquid can preferably be cooled in the storage tank. Therefore, the storage tank may preferably comprise the cooling means. Hence, chilled liquid can be provided for delivering and dispensing a cooled liquid or beverage.

The delivery unit may comprise a heater for heating the liquid. The liquid may be heated, for instance, in the storage tank. Therefore, the storage tank may preferably comprise the heater. Hence, it is possible to heat up the liquid to provide a heated or hot liquid/beverage for dispensing. Also, the heated liquid may preferably be used as a cleaning liquid for cleaning the beverage dispensing machine and in particular the delivery path, when the removable connector is fluidly connected so that the heated liquid can be circulated along the closed circulation loop.

The delivery unit and/or the dispensing unit may further comprise sanitization means for sanitizing the liquid preferably when being delivered along the delivery path or its delivery unit. The sanitization means may preferably comprise or be a UV lamp, which can be provided such that the liquid and preferably the delivered liquid can be irradiated and thus exposed with UV light for sanitizing purposes. Hence, the liquid being delivered for a beverage dispensing or preparation, or the liquid being delivered or circulated for cleaning purposes can be sanitized, which further increases safety for the user and cleanliness of the machine.

The delivery unit further comprises a pump for delivering the liquid along the delivery path and/or the closed circulation loop. Hence, the integrated pump allows for an easy and accurate delivery or circulation of the liquid. Also, as the pump is provided in the delivery unit, it may function for both, the delivery of liquid for beverage dispensing as well as the delivery or circulation of liquid upon cleaning of the beverage dispensing machine; this preferably along the closed circulation loop.

The beverage dispensing machine may further comprise filtering means for up-stream filtering the liquid to be stored in the storage tank. The filtering means are preferably removably connected to the beverage dispensing machine, and the removable connector may fluidly connect the dispensing unit and the inlet only when the filtering means are not connected to and/or removed from the beverage dispensing machine.

The removable connector may comprise a space for carrying an amount of liquid and this preferably along the closed circulation loop when being fluidly connected with or to the delivery path. Hence, a cleaning liquid can be carried along with the connector so that enough cleaning liquid is present for a cleaning process when the connector is fluidly connected to the delivery path. Also, the space may be used to flush cleaning liquid into the space of the connector at the end of a cleaning process to thus allow for an easy removal of the complete cleaning liquid. Hence, removal of the cleaning liquid is facilitated and cross contamination can be minimized.

The removable connector may comprise an inlet port for fluid connection with or to the dispensing unit. Hence, a defined connection with the connector on the side of the dispensing unit can be easily provided to obtain a secure fluid connection between the removable connector and the dispensing unit. The connector may comprise an outlet port for fluid connection with or to the inlet. Hence, a secure fluid connection of the connector with or to the inlet can be obtained. The inlet port and/or the outlet port may create the corresponding fluid connection to thus form the closed circulation loop in an easy and secure manner.

The removable connector may carry readable and preferably coded information about a cleaning process to be carried out by the beverage dispensing machine once the closed circulation loop is formed. Hence, the connector comes along with a means which allows for an automatic or at least facilitated start and/or run of a corresponding cleaning process. For instance, the readable/coded information may comprise instructions for the beverage dispensing machine to carry out the cleaning process, like duration of the cleaning process, heating temperature of a liquid to be heated and thus used as the cleaning liquid, pump control for delivering the liquid, and the like.

The beverage dispensing machine may further comprise a feeding tank for feeding liquid into the delivery path. Hence, a particular amount of liquid can be stored ready for use in the beverage dispensing machine, e.g. as a liquid for beverage dispensing and/or a cleaning liquid.

The feeding tank may be removably attached. Hence, refilling of the feeding tank is facilitated. Also, the feeding tank can be provided only in case it is required. Moreover, it is also possible to remove or even replace the feeding tank, e.g. for maintenance reasons, cleaning purposes (e.g. to put the feeding tank in a dishwasher), or to allow use of different types of feeding tanks which may differ, for instance, in size, design, colour, and the like.

The feeding tank may be selectively fluidly connectable to the delivery path, preferably via the inlet, preferably when the connector is not connected with or to the delivery path. By providing the feeding tank in a selectively fluidly connectable manner to the delivery path, liquid from the feeding tank can be provided or retrieved whenever required. The same inlet may be used both for attaching the feeding tank to supply a liquid, e.g. for beverage dispensing, as well as for attaching the connector - e.g. via its outlet port - for creating the closed circulation loop for circulating the liquid during a cleaning process. Hence, the number of parts can be reduced and the overall layout of the beverage dispensing machine can be facilitated.

The dispensing unit may comprise a beverage preparation unit for producing a beverage based on the (delivered) liquid. Hence, the liquid, like water, can be flavoured or enriched, e.g. by mixing, brewing, dissolving, infusion, and the like. Preferably, the beverage preparation unit may include a mixing chamber and/or a brewing chamber.

The dispensing unit and preferably the beverage preparation unit may comprise a receiving section for receiving a comestible product (e.g. in a powdery, gel, pasty, liquid, or other suitable form) preferably carried in a capsule, pad, pod, sachet, container, and the like, to be placed in the delivery path so that the (delivered) liquid (e.g. water) can interact (e.g. by brewing, infusion, dissolving, dissolution, mixing, etc.) with the comestible product to prepare a beverage. Hence, many different types of beverages can be easily prepared and dispensed by the beverage dispensing machine, as desired. It is, of course, also possible that any type of additives, like flavours, can be delivered in a separate additive delivery path or even in/by the mentioned delivery path so as to mix the additive with the liquid at some point along the delivery path and preferably in the dispensing unit for easily preparing different types of liquids by the beverage dispensing machine.

The control unit is configured to activate the cleaning process upon detection of the cleaning command by the detector. Hence, the cleaning process can be easily and quickly initiated. The immediate activation upon detection of the cleaning command may be made dependent from additional requirements; e.g. it may only be initiated if the closed circulation loop is formed and/or if the connector is fluidly connected to the dispensing unit. Hence, safety of the cleaning process is increased.

The control unit can be configured to carry out a beverage dispensing process by delivering liquid along the delivery path and out of the dispensing unit, preferably by controlling the mentioned pump. Hence, beverage production in a highly clean environment can be easily carried out in an automated manner thus increasing safety and efficiency of the beverage dispensing machine.

The beverage dispensing machine may further comprise a connector sensor for detecting the presence of the connector. The beverage dispensing machine or the control unit can then be (further) configured to start the cleaning process based on or upon detection of the presence of the removable connector or completion of forming the closed circulation loop. Hence, presence of the removable connector or completion of forming the closed circulation loop may allow for an immediate or defined start of the cleaning process. This automation facilitates the use of the beverage dispensing machine. Hence, compared to the prior art, the user does not need to remember any complex procedure to activate the cleaning process and/or handle any cleaning liquids. Moreover, carrying out the cleaning process can be increased in safety as the cleaning process may not be accidentally initiated without the required removable connector be present/attached or the closed circulation loop be created/formed.

The connector sensor may be a presence sensor, a code reader, an optical sensor, like a camera, etc. By the connector sensor being a presence sensor, the mere presence of the connector can be detected and thus an easy way for initiating the cleaning process can be provided. The connector sensor being a code reader may allow to detect a defined code, e.g., carried on the connector, like the mentioned readable and preferably coded information. The code reader may, for instance, be an RFID reader while the readable information carried by the connector can be stored on an RFID tag or RFID chip. The connector sensor may also be an optical sensor, like a camera, for detecting presence, position, type, code, and the like of the connector and thus provides a quite sophisticated sensor means for initiating the cleaning process for improved cleaning results.

According to another aspect, the present invention is directed to a method for controlling a beverage dispensing machine. The method comprises
- providing a beverage dispensing machine according to the present invention,
- detecting a cleaning command by the detector, and
- activating (i.e. initiating and carrying out) a cleaning process based on the detection of the cleaning command, wherein the cleaning process comprises delivering liquid along the delivery path.

Hence, for the reasons already presented herein above regarding the beverage dispensing machine, a method for controlling the beverage dispensing machine to allow for an easy activation of the cleaning process is provided. By simply detecting the cleaning command, the cleaning process is initiated without further interaction of a user. Hence, no complex procedure to activate the cleaning process is required thus making the cleaning process fail-safe. To avoid repetitions, it is referred to the comments and advantages as presented herein above for the beverage dispensing machine, which apply mutatis mutandis for the method.

The method may further comprise fluidly connecting the connector to the dispensing unit before activating the cleaning process. The delivered liquid may then be received - e.g. collected - in or by the connector during the cleaning process. Hence, the cleaning liquid may be securely received and preferably stored, e.g., when being flushed from the dispensing unit. Also, easy removal of the cleaning liquid can be obtained if collected in the connector; e.g. in its space.

The method further comprises fluidly connecting a cleaning path to the delivery path before activating the cleaning process to obtain a closed circulation loop. This step may be triggered by the detection of the cleaning command. The cleaning process may then comprise circulating the liquid through the closed circulation loop. Hence, cleaning can be efficiently performed, preferably encompassing the complete delivery path. Also, a user may not interfere with any cleaning liquid.

The step of fluidly connecting the cleaning path comprises attaching the connector to fluidly connect the dispensing unit and the inlet to form the closed circulation loop. Hence, by simply attaching the connector, a fluid and preferably also physical link between the dispensing unit and the outlet can be easily created to thus defining a proper loop along the (complete) delivery path of the machine via the dispensing unit (outlet) and then back to its inlet. Hence, a safe and easy as well as proper cleaning can be obtained. To avoid repetitions, it is referred to the comments and advantages as presented herein above for the beverage dispensing machine, which apply mutatis mutandis for the method.

The step of detecting the cleaning command by the detector may comprise detecting the presence of the connector. Hence, the cleaning command can be easily provided, thus allowing for an easy activation of the cleaning process. The step of detecting the cleaning command by the detector may also comprise detecting the closed circulation loop be formed. Hence, the cleaning command can be integrated in the machine thus facilitating the activation process. Also, if the cleaning command is linked to the completion of a required closed circulation loop, the cleaning process can be made safe and foolproof. The step of detecting the cleaning command by the detector may also comprise reading out the cleaning command preferably wirelessly or optically, e.g. from a secondary device like the connector or a smartphone, wherein the cleaning command is preferably stored in a barcode or an RFID tag or transmitted via the internet. Hence, the cleaning command can be securely and easily provided. Moreover, further information carried by the connector may additionally be read out preferably in a way that corresponding information, e.g. for feeding a control unit of the beverage dispensing machine, can be obtained to thus individualize the cleaning process, e.g. according to the connector be used or cleaning liquid be required.

The step of circulating the liquid may be automatically initiated by the step of attaching the removable connector (or connector), preferably by presence recognition of the connector and/or recognition of the closed circulation loop be formed and/or based on or upon reading out preferably coded information carried by the connector. Hence, the cleaning of the beverage dispensing machine and particularly of the complete delivery path is facilitated. Also, a user may not interfere with any cleaning liquid. Furthermore, no complex procedure to activate the cleaning process is required thus making the cleaning process fail-safe. If further information carried by the connector is read out, corresponding information, e.g. for feeding a control unit of the beverage dispensing machine, can be obtained to thus individualize the cleaning process, e.g. according to the connector be used or cleaning liquid be required.

The cleaning process is activated upon detection of the cleaning command.

Hence, the cleaning process can be quickly initiated and thus efficiently performed.

The cleaning process may be carried out for a predefined duration. Alternatively or additionally, the cleaning process may be carried out until reaching a predefined cleaning level of the beverage dispensing machine, which may, for instance, be measured based on the level of contamination of the cleaning liquid. Hence, a sufficient and proper cleaning can be achieved.

The step of delivering or preferably circulating the liquid may be deferred or paused after having attached the connector if or as long as an amount or level of liquid in the delivery path and/or in the closed circulation loop and/or in the storage tank and/or in the connector, like in the space, and/or in the cleaning path is below a defined threshold value. Hence, it can be ensured that always a sufficient amount of liquid - particularly cleaning liquid - is provided in the cleaning cycle. Moreover, it can thus be detected whether or not all of the cleaning liquid has been flushed at the end of the cleaning process. The cleaning process can thus be improved in safety.

Preferably, an output may be generated if or as long as the amount or level of liquid is below the mentioned threshold value. This output can be, for instance, a visual output like a lamp or a display indicating by colour and/or text and/or different level of light intensity, and the like, that and preferably also which type of error was detected. The output may also be an acoustic output, like a sound, a beep or even a voice output. Hence, dependent on the level of importance and type of beverage dispensing machine, many different types of output are possible, as desired.

The liquid may be heated, preferably by the heater, before and/or during it be delivered or preferably circulated. Hence, the heated liquid may be used as a cleaning liquid, which allows for an efficient and economic cleaning process. Moreover, additional cleaning liquids or admixtures, like chemicals, can be avoided.

A beverage may be dispensed by delivering liquid along the delivery path and out of the dispensing unit at a time when no cleaning process is carried out. Hence, the beverage dispensing process and the cleaning process can be clearly distinguished so that any cross-contamination can be avoided. The beverage may be produced, preferably in the beverage preparation unit of the dispensing unit, based on the liquid before being dispensed. Hence, the liquid can be enriched - e.g. flavoured, carbonized, etc. - to allow for a huge variety of beverages to be dispensed. The liquid may further be used for a mixing, brewing, infusion, dissolution, and any other type of beverage preparation step. For instance, a capsule, pad, pod, sachet, container, and the like may be inserted into the beverage preparation unit carrying a comestible product thus being placed along the delivery path so that the liquid can interact with the comestible product when being delivered, e.g. by being injected into the capsule.

### 4. Brief description of drawings

Further features, details and advantages of the present invention will now be described in relation to the embodiments of the enclosed figures.
- Fig. 1: shows a schematic front view of a beverage dispensing machine according to a first embodiment of the present invention in a beverage dispensing condition,
- Fig. 2: shows a schematic front view of the beverage dispensing machine in a cleaning condition, and
- Fig. 3: shows a schematic view of a beverage dispensing machine according to a second embodiment of the present invention in a cleaning condition.

### 5. Detailed description

The figures show different embodiments of a beverage dispensing machine 1 as well as particular details and parts thereof. All of the embodiments show a dispenser-type beverage dispensing machine 1. However, the beverage dispensing machine 1 may also be of another type, like, for instance, a brewing- or infusion-type beverage dispensing machine 1. The beverage dispensing machine 1 may be adapted for being used by a consumer, who requests (on demand) a beverage from the beverage dispensing machine 1. That is, the beverage dispensing machine 1 may be adapted to discharge or dispense a beverage that is ready for drinking by the consumer, i.e. a ready-to-drink beverage. The beverage dispensing machine is not limited to a specific design. Preferably, the beverage dispensing machine 1 is designed to be used on the side of a business (B₂B) and/or on the side of a consumer (B2C). For example, the beverage dispensing machine 1 may be designed as a vending machine (airport, mall, public area, etc.), in B2B (hotel, restaurant, café, i.e. "HoReCa", fitness centre, office, etc.) and/or B2C (e.g., at home). The beverage dispensing machine 1 may be designed as a vending machine, a water dispenser, and/or a home appliance device. The beverage dispensing machine 1 may be designed for being mounted or positioned to a wall (wall-mounted), a bottom and/or a table top, and/or the beverage dispensing machine 1 may have a free standing design. The beverage dispensing machine 1 may comprise a connection for a power supply in order to supply the respective components of the beverage dispensing machine 1 with electrical energy.

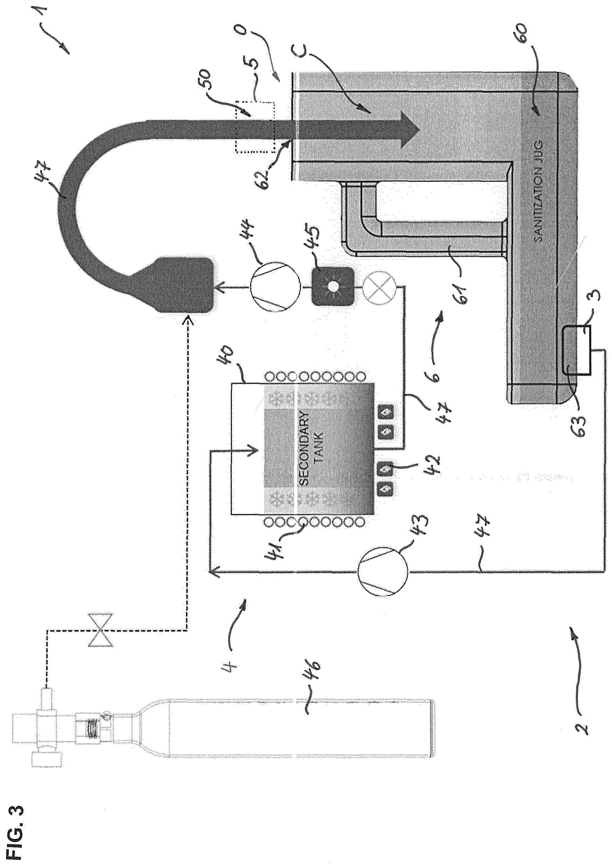

The beverage dispensing machine 1 comprises a delivery path 2. The delivery path 2 is designed for delivering a liquid through the beverage dispensing machine 1. The delivery path 2 is exemplarily shown in Fig. 3.

The delivery path 2 comprises a delivery unit 4 for delivering a liquid through the beverage dispensing machine 1. Furthermore, the delivery path 2 comprises a dispensing unit 5 for dispensing the delivered liquid.

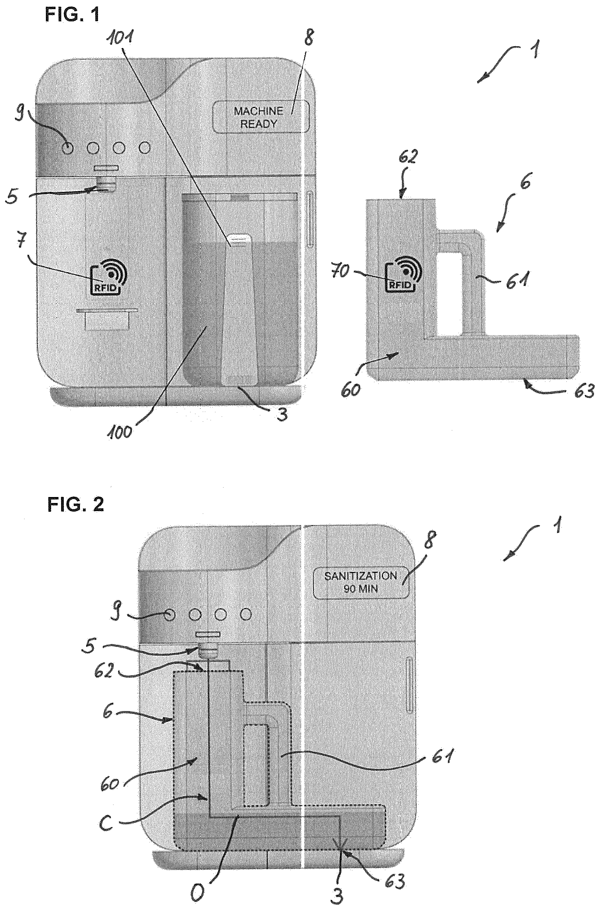

The delivery path 2 may optionally further comprise an inlet 3 for feeding a liquid to the delivery unit 4. As exemplarily shown in Fig. 1, the beverage dispensing machine 1 may also comprise a feeding tank 100 for feeding liquid into the delivery path 2, here by being connected to the inlet 3. The feeding tank 100 may be removably attachable, particularly when the liquid shall be fed through the inlet 3. Here, the feeding tank 100 is preferably selectively fluidly connectable/connected to the delivery path 2, preferably via the inlet 3. The feeding tank 100 may have an in-tank filter 101.

The delivery path or at least the delivery unit 4 may comprise any kind of means to allow flow - i.e. delivery - of the liquid, like fluid lines 47 or other type of piping.

The delivery unit 4 may comprise a storage tank 40 for carrying an amount of liquid, preferably fed via the inlet 3 (e.g., by being fluidly connected/connectable to the inlet 3), to be delivered to the dispensing unit 5 (e.g., by being fluidly connected/connectable to the dispensing unit 5), as exemplarily shown in Fig. 3.

As can also be seen in Fig. 3, the delivery unit 4 and preferably the storage tank 40 may comprise cooling means 41 for cooling the liquid; here preferably the liquid stored in the storage tank 40.

Moreover, the delivery unit 4 and preferably the storage tank 40 may comprise a heater 42 for heating the liquid; here preferably the liquid stored in the storage tank 40.

Hence, as desired, preferably either a heated or chilled liquid can be stored in the storage tank 40 dependent on the process to be carried out, or a user's demand or beverage/liquid dispensing request.

The delivery unit 4 (see Fig. 3) and/or the dispensing unit 5 may further comprise sanitization means 45 for sanitizing the liquid preferably upon the liquid being delivered. The sanitization means 45 can be a UV lamp, as exemplarily shown in Fig. 3, which can be provided along the delivery unit 4 and particularly along a line 47 for delivering the liquid so as to expose the (flowing/delivered) liquid with UV light for sanitizing purposes.

As is further shown in Fig. 3, the delivery unit 4 may further comprise a pump 43, 44 for delivering the liquid along the delivery path 2. Here, a first pump 43 is provided for delivering liquid from the inlet 3 through part of the delivery unit 4 and into the storage tank 40. There, the stored liquid can be heated or chilled as described, preferably by the mentioned cooling means 41 and/or heater 42. Another pump 44 is here provided between the storage tank 40 and the dispensing unit 5 to deliver the liquid from the storage tank 40 to the dispensing unit 5 to dispense the delivered liquid. Along the fluid lines 47 through which the liquid is pumped by the second pump 44, the sanitization means 45 - here in form of a UV lamp - can be provided to expose the so delivered liquid with UV light for sanitizing purposes.

The beverage dispensing machine 1 may further comprise an in-line carbonation device 46 for entering carbon dioxide (CO₂) into the liquid being delivered through the beverage dispensing machine 1; here preferably through the delivery path 2 or its delivery unit 4.

The dispensing unit 5 may comprise a beverage preparation unit 50 for preparing a beverage based on the (delivered) liquid. The beverage preparation unit 50 may be a mixing chamber, a brewing chamber, or the like. Preferably, the dispensing unit 5 and more preferred its beverage preparation unit 50 may comprise a receiving section for receiving a capsule (or other type of recipient like a pad, pod, sachet, container, and the like) carrying a comestible product to be thus easily placed in the delivery path 2 so that the (delivered) liquid can interact (e.g. by brewing, infusion, dissolution, dissolving, mixing, etc.) with the comestible product to prepare a beverage.

The beverage dispensing machine 1 further comprises a detector 7 for detecting a cleaning command (see Fig. 3) as well as a control unit (not depicted) configured to activate a cleaning process based on detection of the cleaning command by the detector 7. The cleaning process at least comprises delivery of the liquid along the delivery path 2. Hence, the liquid (like water or another cleaning liquid) can travel along the delivery path 2 to thus clean the respective lines 47 or other type of piping or elements through which the liquid is delivered.

The detector 7 may be a presence sensor for detecting the physical presence of an element. Moreover, the detector 7 may also be a code reader, as exemplarily shown in Fig. 2. Here, the code detector 7 is exemplarily shown as an RFID reader (e.g. a transceiver) here for reading out an RFID tag 70. The cleaning command is preferably stored in the RFID tag 70. The detector 7 may also be an optical detector or sensor, like a camera or a barcode reader. The cleaning command may then be stored in a respective barcode or QR-code to be read out by the detector 7.

Based on the so received cleaning command, the cleaning process of the beverage dispensing machine 1 can be activated, i.e. initiated and carried out. The cleaning command can be any type of detectable information which allows for the control unit be activated accordingly. Hence, the cleaning command can be simply the (physical) presence of an element in the sensing area of the detector 7. The cleaning command may also be a structural or functional information to be detected , like a contour of an element, a colour, a readable and preferably coded information carried on a chip or another element and the like. The cleaning command may also be a (coded) control command to be implemented in the control unit or simply activating a cleaning sequence be stored on the control unit when being detected by the detector. The cleaning command thus can be any type of detectable feature as long as it can be identified as such by a corresponding detector 7.

With reference to Fig. 3, the beverage dispensing machine 1 may further comprise a cleaning path C which is selectively fluidly connectable to the delivery path 2 to form a closed circulation loop O. The pump 43, 44 may allow for delivery of the liquid along the closed circulation loop O.

The cleaning path C may comprise an integrated cleaning line (not represented), which may, for instance, short-cut part of a delivery line 47 of the delivery unit 4. The beverage dispensing machine 1 may preferably further comprise valves (not represented) for selectively fluidly connecting the cleaning line (not represented) to the delivery path 2 to form the closed circulation loop O.

The cleaning path C may also be part of an external removable element which may, for instance, selectively fluidly connect the dispensing unit 5 and the inlet 3 to thus form the closed circulation loop O preferably along the complete delivery path 2. For instance, a removable connector 6 - here exemplarily in the form of a jug - is shown and being designed for fluidly connecting the dispensing unit 5 and the inlet 3 as the cleaning path C to form the closed circulation loop 0 together with the delivery unit 4 for circulating the liquid along the delivery path 2 as shown in Figures 2 and 3.

The connector 6 preferably may also simply be fluidly connectable to the dispensing unit 5 for receiving the delivered liquid during the cleaning process. Hence, the discharged or flushed cleaning liquid can be easily and securely collected and also removed for an easy and safe disposal.

Preferably, the connector 6 may comprise a space 60 for carrying an amount of liquid, here preferably along the closed circulation loop O when being fluidly connected with or to the delivery path 2, as exemplarily shown in Figures 2 and 3. Here, the connector 6 is exemplarily shown as a jug. The connector 6 preferably comprises a handle 61 for easily carrying the connector 6.

The connector 6 may comprise an inlet port 62 for fluid (and preferably also physical) connection with or to the dispensing unit 5, as shown in Fig. 2. As schematically shown in Fig. 3, the connector 6 may further preferably comprise an outlet port 63 for fluid (and preferably also physical) connection with or to the inlet 3 to thus form the closed circulation loop O, if desired and as exemplarily shown in both Figures 2 and 3.

The beverage dispensing machine 1 may further comprise filtering means (not represented) for up-stream filtering the liquid to be stored in the storage tank 40. The filtering means are preferably removably connected to the beverage dispensing machine 1, and the removable connector 6 may fluidly connect the dispensing unit 5 and the inlet 3 only when the filtering means are not connected to and/or removed from the beverage dispensing machine 1.

As exemplarily shown in Fig. 1, the connector 6 may carry readable and preferably coded information comprising the cleaning command. This information may further comprise other information, e.g. related to the cleaning process, such as about the cleaning process to be carried out by the beverage dispensing machine 1 once the closed circulation loop O is formed. Here, the readable information is provided by way of the mentioned RFID tag 70 or any other type of wireless transmitter. The readable and preferably coded information may also be provided by way of a visual code, like a barcode or a QR-code. The visual code may be glued, printed, etc. on the connector 6. The cleaning command may also be simply reside in or be the shape, colour or presence of the connector 6.

The control unit may also be configured to activate the cleaning process upon detection of the cleaning command by the detector 7. Hence, an easy and immediate start of the cleaning process can be initiated, thus resulting in a most efficient cleaning process.

The activation of the cleaning process is preferably dependent on the fluid delivery status of the beverage dispensing machine 1. For instance, in a preferred embodiment, the cleaning process may only be activated if the closed circulation loop 0 is formed and/or the connector 6 is fluidly connected to the dispensing unit 2.

The control unit may be configured to carry out a beverage dispensing process by delivering liquid along the delivery path 2 and out of the dispensing unit 5 - e.g. into a drinking vessel - preferably by controlling the pump(s) 43, 44 or when the connector 6 is not connected with or to the delivery path 2, as exemplarily shown in Fig. 1. In this condition, the feeding tank 100 may be (selectively) fluidly connected to the delivery path 2; here preferably via the inlet 3.

The beverage preparation machine 1 or its control unit may also be configured to carry out a cleaning process by circulating liquid through the closed circulation loop O when the connector 6 is fluidly connected to the delivery path 2, as exemplarily shown in Fig. 2 and 3.

In both the beverage dispensing process and the cleaning process, the control unit may preferably be configured to deliver or circulate the liquid by controlling at least one or all of the pumps 43, 44.

The beverage dispensing machine 1 may further comprise a connector sensor 7 for detecting the presence of the connector 6. The connector sensor 7 may be a presence sensor for detecting the physical presence of the connector 6. Moreover, the connector sensor 7 may also be a code reader, as exemplarily shown in Fig. 2. Here, the code reader 7 is exemplarily shown as an RFID reader (e.g. a transceiver) here for reading out the RFID tag 70 carried by the connector 6. The RFID tag 70 may carry the mentioned readable and preferably coded information about the cleaning process to be carried out by the beverage dispensing machine 1. The connector sensor 7 may also be an optical sensor, like a camera.

The beverage preparation machine 1 or its control unit may (further) be configured to start the cleaning process based on or upon detection of the presence of a connector 6 or completion of forming the closed circulation loop O.

In the following, a method for controlling the beverage dispensing machine 1 is described.

First of all, the beverage dispensing machine 1 according to the present invention is provided.

Then, a cleaning command is detected by the detector 7. This step may comprise the detection of the closed circulation loop be formed. This can be done, for instance, by detecting the valves (not represented) having fluidly connected the cleaning line (not represented) to the delivery path 2 to form the closed circulation loop O. Detection of the cleaning command may also comprise reading out the cleaning command preferably wirelessly or optically, e.g. from a secondary device like the connector 6 or a smartphone. The so provided cleaning command can be, for instance, stored in a barcode, e.g. printed or adhered to the respective device or visualized on a display thereof, or even stored in an RFID tag 70, e.g. attached to or integrated in the respective device.

The step of detecting the cleaning command by the detector 7 may also comprise the detection of the presence of the connector 6. Therefore, the connector 6 may be attached to be fluidly connected to the dispensing unit 5 for receiving or collecting cleaning liquid be dispensed (e.g. discharged or flushed) via the dispensing unit 5. The connector 6 may also be attached for fluidly connecting the dispensing unit 5 and the inlet 3 to form the closed circulation loop O together with the delivery unit 4. Before attaching the connector 6 in that way, the feeding tank 100 - if fluidly connected or attached to the inlet 3 - may be removed or disconnected to release the inlet 3 so that the connector 6 can be fluidly connected with or to the inlet 3, as defined. If a feeding tank 100 is used which can be fluidly connected to the delivery path 2 at a location other than the inlet 3, then the feeding tank 100 may remain connected irrespective of the connector 6 being fluidly connected to the inlet 3 or not.

Finally, a cleaning process is activated based on the detection of the cleaning command. The activation of the cleaning process is thus dependent on the detection of the cleaning command. The activation based on the detection of the cleaning command may, for instance, result in the machine 1 activating the cleaning process at a defined time, e.g. during a time of limited use of the machine 1 like at night. The cleaning process may preferably be activated even upon detection of the cleaning command; i.e. immediately when detecting the same. This may be made dependent on the status of the machine so that a currently running process - like a beverage production or dispensing process - is finished before the cleaning process then immediately starts thereafter.

The cleaning process at least comprises delivering liquid along the delivery path 2. If a closed circulation loop O is formed or created, the cleaning process may comprise circulating the (cleaning) liquid through the closed circulation loop O for cleaning the delivery path 2, as is exemplarily shown in Figures 2 and 3 by the corresponding arrows indicating the direction of flow/delivery of the liquid through the beverage dispensing machine 1.

The method may further comprise fluidly connecting the connector 6 to the dispensing unit 5 before activating the cleaning process. The method then further comprises receiving (e.g. collecting) the delivered liquid by the connector 6 during the cleaning process. Hence, any liquid be discharged or flushed from the dispensing unit 5 may be securely received in or collected by the collector 6.

The method may further comprise fluidly connecting the cleaning path C to the delivery path 2 before activating the cleaning process to obtain a closed circulation loop O. This can be done, for instance, by controlling the valves (not represented) to fluidly connect the integrated cleaning line (not represented) to the delivery path 2 to form the closed circulation loop O. Also, this can be done, for instance and as mentioned, by fluidly connecting (e.g. by attaching) the connector 6 to the delivery path 2, e.g. by attaching the collector 6 to fluidly connect the dispensing unit 5 and the inlet 3 to form the closed circulation loop O. The cleaning process then further comprises circulating the liquid through the closed circulation loop O, as mentioned.

The step of circulating the liquid through the closed circulation loop O can preferably be automatically initiated by the step of attaching the connector 6, which can be detected as the cleaning command; this preferably by presence recognition of the connector 6 so that once the connector 6 is recognized to be present at a defined position or fluid connection status with respect to the delivery path 2, the cleaning process, i.e. circulation of the liquid through the circulation loop O, is activated. The step of circulating the liquid may also be automatically initiated by recognition of the closed circulation loop O be formed. Therefore, corresponding sensors may be provided to recognise that the connector 6 - preferably by its inlet port 62 and outlet port 63 - is securely fluidly connected to the dispensing unit 5 and the inlet 3, respectively. The step of circulating the liquid may also be automatically initiated based on or upon reading out information, like coded information, carried by the connector 6 or another device, like a smartphone. For instance, the RFID tag 70 as shown in Fig. 1 may be recognised and read out by the RFID reader 7 here provided on the beverage dispensing machine 1 once the connector 6 is attached.

The cleaning process, i.e. the step of delivering or circulating the liquid, may be carried out for a predefined duration. Hence, a sufficient cleaning can be realized. The cleaning process, i.e. the step of delivering or circulating the liquid, may also be carried out until reaching a predefined cleaning level of the beverage dispensing machine 1. Therefore, for instance, the delivered or circulating cleaning liquid may be analysed to check the level of impurity of the cleaning liquid, which may be an indication for the cleaning level.

The step of delivering or preferably circulating the liquid may be deferred or paused if or as long as an amount or level of liquid in the delivery path 2, and/or in the closed circulation loop O, and/or in the storage tank 40, and/or in the connector 6, like in the space 60, and/or in the cleaning path, may be below a defined threshold value. Therefore, the beverage preparation machine 1 may comprise a level sensor for detecting a level of liquid, e.g., in the storage tank 40 or in the space 60 of the connector 6, if present.

In case of the step of circulating the liquid be deferred or paused as described, an output may be generated if or as long as the amount or level of liquid is below the said threshold value. This output can be a visual or acoustic or any other type of output. For instance, the beverage dispensing machine 1 may comprise a display 8 or indicator lamps 9 by means of which a corresponding output can be generated. The display 8 may be a touch display so that a user can input a dispensing request, if desired. The display 8 may also be used to inform the user about the current status of the beverage dispensing machine 1. For instance, as shown in Fig. 1, the display 8 may indicate that the machine 1 is ready for beverage dispensing. As exemplarily shown in Fig. 2, the display 8 may also inform the user about the current status of the cleaning process, e.g. by displaying the remaining time until the cleaning process is successfully terminated.

The liquid may be heated, preferably by the heater 42, before and/or during it be delivered or preferably circulated. Hence, the heated liquid may be used as the cleaning liquid, which thus facilitates the cleaning process and makes it most efficient and economic.

With reference to Fig. 1, a beverage may be dispensed by delivering liquid along the delivery path 2 and out of the dispensing unit 5 at a time when no cleaning process is carried out; e.g. at a time when the connector 6 is not attached or the cleaning path C is not fluidly connected to the delivery path 2. If a feeding tank 100 is attached, liquid may be delivered by the first pump 43 into the storage tank 40, where it is stored. There, the liquid can be cooled by the cooling means 41 or heated by the heater 42. Then, the so stored liquid can be delivered by the second pump 44 from the storage tank 40 to the dispensing unit 5 where it is dispensed through the dispensing unit 5 and preferably into a drinking vessel (not shown) being placed under the dispensing unit 5.

The beverage may be produced, preferably in the beverage preparation unit 50 of the dispensing unit 5, based on the liquid before being dispensed. Therefore, the liquid may interact with the corresponding comestible product, e.g. being in a pourable, powdery, gel, pasty, liquid, or other suitable form. The comestible product may be carried in a capsule, pad, pod, sachet, container, and the like, which may be placed or received in the beverage preparation unit 50 and thus along the delivery path 2 so to allow the liquid be injected to interact with the comestible product to produce the beverage which is then discharged / dispensed via the dispensing unit 5. It is also possible that an additive is delivered or dispensed along with the liquid or separately, e.g. to or into the dispensing unit 5 to be mixed with the liquid before or at dispensing - or even thereafter in a drinking vessel - for preparing the beverage.

The present invention is not limited to the embodiments as described herein above as long as being covered by the appended claims.

## Claims

1. Beverage dispensing machine (1), comprising:
• a delivery path (2) having
∘ a delivery unit (4) for delivering a liquid through the beverage dispensing machine (1), and
∘ a dispensing unit (5) for dispensing the delivered liquid,
• a detector (7) for detecting a cleaning command, and
• a control unit configured to activate a cleaning process based on detection of the cleaning command by the detector (7), wherein the cleaning process comprises delivery of the liquid along the delivery path (2).
wherein the delivery unit (4) comprises a storage tank (40) for carrying an amount of liquid to be delivered to the dispensing unit (5) and a pump (43, 44) for delivering the liquid along the delivery path (2), **characterized in that** the delivery path (2) comprises an inlet (3) for feeding a liquid to the delivery unit (4) and the beverage dispensing machine (1) further comprises a removable connector (6) which is fluidly connectable to the dispensing unit (5) for receiving the delivered liquid during the cleaning process that when positioned in the beverage dispensing machine forms a cleaning path (C) by defining the closed circulation loop (O) fluidly connecting the dispensing unit (5) and the inlet (3). wherein the pump (43, 44) delivers the liquid along the closed circulation loop (O), and/or
wherein the delivery unit (4), preferably the storage tank (40), comprises cooling means (41) for cooling the liquid preferably in the storage tank (40), and/or
wherein the delivery unit (4), preferably the storage tank (40), comprises a heater (42) for heating the liquid preferably in the storage tank (40).

2. Beverage dispensing machine (1) according to claim 1, wherein the detector (7) is a presence sensor, and/or an optical detector, like a barcode reader, and/or a code reader, like an RFID code reader.

3. Beverage dispensing machine (1) according to claim 1 or 2, wherein the removable connector (6) preferably comprises a space (60) for carrying an amount of liquid, preferably along the closed circulation loop (O), when being fluidly connected with the delivery path (2),

4. Beverage dispensing machine (1) according to any one of the preceding claims, wherein the removable connector (6) carries readable and more preferred coded information comprising the cleaning command.

5. Beverage dispensing machine (1) according to any one of the preceding claims, wherein the control unit is configured to carry out a beverage dispensing process by delivering liquid along the delivery path (2) and out of the dispensing unit (5) when the removable connector (6) is not connected with the delivery path (2), or a cleaning process by circulating liquid through the closed circulation loop (O) when the removable connector (6) is fluidly connected to the delivery path (2), preferably by controlling the pump (43, 44).

6. Beverage dispensing machine (1) according to any one of the preceding claims, further comprising a connector sensor (7) for detecting the presence of the removable connector (6), wherein preferably the beverage dispensing machine (1) or the control unit is configured to start the cleaning process based on or upon detection of the presence of the connector (6) or completion of forming the closed circulation loop (O),
wherein the connector sensor (7) preferably is a presence sensor, a code reader, an optical sensor, like a camera.

7. Beverage dispensing machine (1) according to any one of the preceding claims, wherein the beverage dispensing machine (1) further comprises a feeding tank (100) for feeding liquid into the delivery path (2),
wherein the feeding tank (100) preferably is removably attachable, and/or
wherein the feeding tank (100) is selectively fluidly connectable to the delivery path (2), preferably via the inlet (3) when the connector (6) is not connected with the delivery path (2).

8. Beverage dispensing machine (1) according to any one of the preceding claims, further comprising filtering means for up-stream filtering the liquid to be stored in the storage tank (40),
wherein the filtering means preferably are removably connected to the beverage dispensing machine (1), and
wherein the removable connector (6) may fluidly connect the dispensing unit (5) and the inlet (3) only when the filtering means are not connected to and/or removed from the beverage dispensing machine (1).

9. Beverage dispensing machine (1) according to any one of the preceding claims, wherein the control unit is configured to activate the cleaning process upon detection of the cleaning command by the detector (7), preferably provided that the closed circulation loop (O) is formed and/or the connector (6) is fluidly connected to the dispensing unit (5), and/or
wherein the control unit is configured to carry out a beverage dispensing process by delivering liquid along the delivery path (2) and out of the dispensing unit (5), preferably by controlling the pump (43, 44).

10. Method for controlling a beverage dispensing machine (1), comprising:
• providing a beverage dispensing machine (1) according to any one of the preceding claims,
• detecting a cleaning command by the detector (7), and
• activating a cleaning process based on the detection of the cleaning command, wherein the cleaning process comprises delivering liquid along the delivery path (2),
**characterized in that**:
• fluidly connecting a cleaning path (C) to the delivery path (2) before activating the cleaning process to obtain a closed circulation loop (O),
• wherein the cleaning process comprises circulating the liquid through the closed circulation loop (O),
wherein the step of fluidly connecting the cleaning path (C) comprises attaching the removable connector (6) to fluidly connect the dispensing unit (5) and the inlet (3) to form the closed circulation loop (O).

11. Method according to claim 10, further comprising:
• fluidly connecting the removable connector (6) to the dispensing unit (5) before activating the cleaning process, and
• receiving the delivered liquid by the removable connector (6) during the cleaning process.

12. Method according to claim 10 or 11, wherein the step of circulating the liquid is automatically initiated by the step of attaching the removable connector (6), preferably by presence recognition of the connector (6) and/or recognition of the closed circulation loop (O) be formed and/or based on or upon reading out preferably coded information carried by the connector (6).

13. Method according to any one of claims 10 to 12, wherein the step of circulating the liquid is carried out for a predefined duration and/or until reaching a predefined cleaning level, and/or
wherein the step of circulating the liquid is deferred or paused if or as long as an amount or level of liquid in the delivery path (2) and/or the closed circulation loop (O) and/or the storage tank (40) and/or the removable connector (6), like the space (60), and/or the cleaning path (C) is below a defined threshold value.

14. Method according to any one of claims 10 to 13, wherein the step of detecting the cleaning command by the detector (7) comprises: detecting the presence of the removable connector (6) and/or detecting the closed circulation loop (O) be formed and/or reading out the cleaning command preferably wirelessly or optically, e.g. from a secondary device like the removable connector (6) or a smartphone, wherein the cleaning command is preferably stored in a barcode or an RFID tag.

15. Method according to any one of claims 10 to 14, wherein the cleaning process is activated upon detection of the cleaning command, and/or wherein the cleaning process is carried out for a predefined duration and/or until reaching a predefined cleaning level.

## Patentansprüche

1. Getränkeausgabemaschine (1), umfassend:
• einen Zuführungsweg (2), aufweisend
∘ eine Zuführungseinheit (4) zum Zuführen einer Flüssigkeit durch die Getränkeausgabemaschine (1) und
∘ eine Ausgabeeinheit (5) zum Ausgeben der zugeführten Flüssigkeit,
• einen Detektor (7) zum Erfassen eines Reinigungsbefehls, und
• eine Steuereinheit, die konfiguriert ist, um einen Reinigungsprozess basierend auf der Erfassung des Reinigungsbefehls durch den Detektor (7) zu aktivieren, wobei der Reinigungsprozess die Zuführung der Flüssigkeit entlang des Zuführungswegs (2) umfasst.
wobei die Zuführungseinheit (4) einen Speichertank (40) zum Tragen einer Menge an Flüssigkeit, die an die Ausgabeeinheit (5) zuzuführen ist, und eine Pumpe (43,44) zum Zuführen der Flüssigkeit entlang des Zuführungswegs (2) umfasst, **dadurch gekennzeichnet, dass** der Zuführungsweg (2) einen Einlass (3) zum Einspeisen einer Flüssigkeit zu der Zuführungseinheit (4) umfasst und die Getränkeausgabemaschine (1) ferner einen entfernbaren Verbinder (6) umfasst, der mit der Ausgabeeinheit (5) fluidisch verbindbar ist zum Aufnehmen der zugeführten Flüssigkeit während des Reinigungsprozesses, der, wenn in der Getränkeausgabemaschine positioniert, einen Reinigungsweg (C) ausbildet durch Definieren der geschlossenen Zirkulationsschleife (O), die die Ausgabeeinheit (5) und den Einlass (3) fluidisch verbindet, wobei die Pumpe (43,44) die Flüssigkeit entlang der geschlossenen Zirkulationsschleife (O) zuführt, und/oder
wobei die Zuführungseinheit (4), vorzugsweise der Speichertank (40), Kühlmittel (41) zum Kühlen der Flüssigkeit vorzugsweise in dem Speichertank (40) umfasst, und/oder
wobei die Zuführungseinheit (4), vorzugsweise der Speichertank (40), eine Heizvorrichtung (42) zum Erhitzen der Flüssigkeit vorzugsweise in dem Speichertank (40) umfasst.

2. Getränkeausgabemaschine (1) nach Anspruch 1, wobei der Detektor (7) ein Anwesenheitssensor und/oder ein optischer Detektor, wie ein Barcode-Leser und/oder ein Code-Leser, wie ein RFID-Code-Leser, ist.

3. Getränkeausgabemaschine (1) nach Anspruch 1 oder 2, wobei der entfernbare Verbinder (6) vorzugsweise einen Raum (60) zum Enthalten einer Flüssigkeitsmenge umfasst, vorzugsweise entlang der geschlossenen Zirkulationsschleife (O), wenn dieser mit dem Zuführungsweg (2) fluidisch verbunden ist,

4. Getränkeausgabemaschine (1) nach einem der vorstehenden Ansprüche, wobei der entfernbare Verbinder (6) lesbare und mehr bevorzugte kodierte Informationen enthält, umfassend den Reinigungsbefehl.

5. Getränkeausgabemaschine (1) nach einem der vorstehenden Ansprüche, wobei die Steuereinheit konfiguriert ist, um einen Getränkeausgabeprozess durch Zuführen von Flüssigkeit entlang des Zuführungswegs (2) und aus der Ausgabeeinheit (5), wenn der entfernbare Verbinder (6) nicht mit dem Zuführungsweg (2) verbunden ist, oder einen Reinigungsprozess durch Zirkulieren von Flüssigkeit durch die geschlossene Zirkulationsschleife (O) vorzunehmen, wenn der entfernbare Verbinder (6) mit dem Zuführungsweg (2) fluidisch verbunden ist, vorzugsweise durch Steuern der Pumpe (43,44).

6. Getränkeausgabemaschine (1) nach einem der vorstehenden Ansprüche, ferner umfassend einen Verbindersensor (7) zum Erfassen der Anwesenheit des entfernbaren Verbinders (6), wobei vorzugsweise die Getränkeausgabemaschine (1) oder die Steuereinheit konfiguriert ist, um den Reinigungsprozess basierend auf oder bei dem Erfassen der Anwesenheit des Verbinders (6) oder Vollendung der Ausbildung der geschlossenen Zirkulationsschleife (O) zu starten,
wobei der Verbindersensor (7) vorzugsweise ein Anwesenheitssensor, ein Code-Leser, ein optischer Sensor, wie eine Kamera, ist.

7. Getränkeausgabemaschine (1) nach einem der vorstehenden Ansprüche, wobei die Getränkeausgabemaschine (1) ferner einen Einspeisungstank (100) zum Einspeisen von Flüssigkeit in den Zuführungsweg (2) umfasst,
wobei der Einspeisungstank (100) vorzugsweise entfernbar angebracht ist, und/oder
wobei der Einspeisungstank (100) mit dem Zuführungsweg (2) wahlweise fluidisch verbindbar ist, vorzugsweise über den Einlass (3), wenn der Verbinder (6) nicht mit dem Zuführungsweg (2) verbunden ist.

8. Getränkeausgabemaschine (1) nach einem der vorstehenden Ansprüche, ferner umfassend Filtermittel zum stromaufwärtigen Filtern der Flüssigkeit, die in dem Speichertank (40) zu speichern ist,
wobei die Filtermittel vorzugsweise mit der Getränkeausgabemaschine (1) entfernbar verbunden sind, und
wobei der entfernbare Verbinder (6) die Ausgabeeinheit (5) und den Einlass (3) nur dann fluidisch verbinden kann, wenn die Filtermittel nicht mit der Getränkeausgabemaschine (1) verbunden sind und/oder von dieser entfernt sind.

9. Getränkeausgabemaschine (1) nach einem der vorstehenden Ansprüche, wobei die Steuereinheit konfiguriert ist, um den Reinigungsprozess beim Erfassen des Reinigungsbefehls durch den Detektor (7) zu aktivieren, vorzugsweise mit der Maßgabe, dass die geschlossene Zirkulationsschleife (O) ausgebildet ist und/oder der Verbinder (6) mit der Ausgabeeinheit (5) fluidisch verbunden ist, und/oder
wobei die Steuereinheit konfiguriert ist, um einen Getränkeausgabeprozess vorzunehmen, durch Zuführen von Flüssigkeit entlang des Zuführungswegs (2) und aus der Ausgabeeinheit (5), vorzugsweise durch Steuern der Pumpe (43, 44).

10. Verfahren zum Steuern einer Getränkeausgabemaschine (1), umfassend:
• Bereitstellen einer Getränkeausgabemaschine (1) nach einem der vorstehenden Ansprüche,
• Erfassen eines Reinigungsbefehls durch den Detektor (7) und
• Aktivieren eines Reinigungsprozesses basierend auf der Erfassung des Reinigungsbefehls, wobei der Reinigungsprozess das Zuführen von Flüssigkeit entlang des Zuführungswegs (2) umfasst,
**dadurch gekennzeichnet, dass:**
• fluidisches Verbinden eines Reinigungswegs (C) mit dem Zuführungsweg (2) vor dem Aktivieren des Reinigungsprozesses, um eine geschlossene Zirkulationsschleife (O) zu erhalten,
• wobei der Reinigungsprozess das Zirkulieren der Flüssigkeit durch die geschlossene Zirkulationsschleife (O) umfasst,
wobei der Schritt des fluiden Verbindens des Reinigungswegs (C) das Anbringen des entfernbaren Verbinders (6) umfasst, um die Ausgabeeinheit (5) und den Einlass (3) fluidisch zu verbinden, um die geschlossene Zirkulationsschleife (O) auszubilden.

11. Verfahren nach Anspruch 10, ferner umfassend:
• fluidisches Verbinden des entfernbaren Verbinders (6) mit der Ausgabeeinheit (5) vor dem Aktivieren des Reinigungsprozesses, und
• Aufnehmen der zugeführten Flüssigkeit durch den entfernbaren Verbinder (6) während des Reinigungsprozesses.

12. Verfahren nach Anspruch 10 oder 11, wobei der Schritt des Zirkulierens der Flüssigkeit durch den Schritt des Anbringens des entfernbaren Verbinders (6) automatisch eingeleitet wird, vorzugsweise durch Anwesenheitserkennung des Verbinders (6) und/oder Erkennung der geschlossenen Zirkulationsschleife (O), die ausgebildet wird, und/oder basierend auf oder beim Auslesen von vorzugsweise codierten Informationen, die in dem Verbinder (6) enthalten sind.

13. Verfahren nach einem der Ansprüche 10 bis 12, wobei der Schritt des Zirkulierens der Flüssigkeit für eine vordefinierte Dauer und/oder bis zum Erreichen eines vordefinierten Reinigungsniveaus vorgenommen wird, und/oder
wobei der Schritt des Zirkulierens der Flüssigkeit aufgeschoben oder pausiert wird, wenn oder solange eine Menge oder ein Niveau an Flüssigkeit in dem Zuführungsweg (2) und/oder der geschlossenen Zirkulationsschleife (O) und/oder dem Speichertank (40) und/oder dem entfernbaren Verbinder (6), wie dem Raum (60), und/oder dem Reinigungsweg (C) unter einem definierten Schwellenwert liegt.

14. Verfahren nach einem der Ansprüche 10 bis 13, wobei der Schritt des Erfassens des Reinigungsbefehls durch den Detektor (7) umfasst: Erfassen der Anwesenheit des entfernbaren Verbinders (6) und/oder Erfassen, dass die geschlossene Zirkulationsschleife (O) ausgebildet wird und/oder Auslesen des Reinigungsbefehls vorzugsweise drahtlos oder optisch, z. B. von einer sekundären Vorrichtung wie dem entfernbaren Verbinder (6) oder einem Smartphone, wobei der Reinigungsbefehl vorzugsweise in einem Barcode oder einem RFID-Tag gespeichert ist.

15. Verfahren nach einem der Ansprüche 10 bis 14, wobei der Reinigungsprozess bei Erfassung des Reinigungsbefehls aktiviert wird, und/oder wobei der Reinigungsprozess für eine vorgegebene Dauer und/oder bis zum Erreichen eines vorgegebenen Reinigungsniveaus vorgenommen wird.

## Revendications

1. Machine de distribution de boissons (1), comprenant :
• un trajet d'acheminement (2) ayant
∘ une unité d'acheminement (4) pour acheminer un liquide à travers la machine de distribution de boissons (1), et
∘ une unité de distribution (5) pour distribuer le liquide acheminé,
• un détecteur (7) pour détecter une instruction de nettoyage, et
• une unité de commande configurée pour activer un processus de nettoyage sur la base de la détection de l'instruction de nettoyage par le détecteur (7), dans laquelle le processus de nettoyage comprend un acheminement du liquide le long du trajet d'acheminement (2).
dans laquelle l'unité d'acheminement (4) comprend un réservoir de stockage (40) pour transporter une quantité de liquide devant être acheminée vers l'unité de distribution (5) et une pompe (43, 44) pour acheminer le liquide le long du trajet d'acheminement (2), **caractérisée en ce que** le trajet d'acheminement (2) comprend une entrée (3) pour alimenter en liquide l'unité d'acheminement (4) et la machine de distribution de boissons (1) comprend en outre un raccord amovible (6) qui peut être raccordé fluidiquement à l'unité de distribution (5) pour recevoir le liquide acheminé pendant le processus de nettoyage qui, lorsqu'il est positionné dans la machine de distribution de boissons, forme un trajet de nettoyage (C) en définissant une boucle de circulation fermée (O) raccordant fluidiquement l'unité de distribution (5) et l'entrée (3). dans laquelle la pompe (43, 44) achemine le liquide le long de la boucle de circulation fermée (O), et/ou
dans laquelle l'unité d'acheminement (4), de préférence le réservoir de stockage (40), comprend un moyen de refroidissement (41) pour refroidir le liquide de préférence dans le réservoir de stockage (40), et/ou
dans laquelle l'unité d'acheminement (4), de préférence le réservoir de stockage (40), comprend un dispositif de chauffage (42) pour chauffer le liquide, de préférence dans le réservoir de stockage (40).

2. Machine de distribution de boissons (1) selon la revendication 1, dans laquelle le détecteur (7) est un capteur de présence, et/ou un détecteur optique, tel qu'un lecteur de code-barres, et/ou un lecteur de code, tel qu'un lecteur de code RFID.

3. Machine de distribution de boissons (1) selon la revendication 1 ou 2, dans laquelle le raccord amovible (6) comprend de préférence un espace (60) pour transporter une quantité de liquide, de préférence le long de la boucle de circulation fermée (O), lorsqu'il est raccordé fluidiquement au trajet d'acheminement (2),

4. Machine de distribution de boissons (1) selon l'une quelconque des revendications précédentes, dans laquelle le raccord amovible (6) porte des informations lisibles et plus préférablement codées comprenant l'instruction de nettoyage.

5. Machine de distribution de boissons (1) selon l'une quelconque des revendications précédentes, dans laquelle l'unité de commande est configurée pour effectuer un processus de distribution de boisson en acheminant du liquide le long du trajet de distribution (2) et hors de l'unité de distribution (5) lorsque le raccord amovible (6) n'est pas raccordé au trajet d'acheminement (2), ou un processus de nettoyage en faisant circuler du liquide à travers la boucle de circulation fermée (O) lorsque le raccord amovible (6) est raccordé fluidiquement au trajet d'acheminement (2), de préférence en commandant la pompe (43, 44).

6. Machine de distribution de boissons (1) selon l'une quelconque des revendications précédentes, comprenant en outre un capteur de raccord (7) pour détecter la présence du raccord amovible (6), dans laquelle, de préférence, la machine de distribution de boissons (1) ou l'unité de commande est configurée pour démarrer le processus de nettoyage sur la base de ou lors de la détection de la présence du raccord (6) ou de l'achèvement de la formation de la boucle de circulation fermée (O),
dans laquelle le capteur de raccord (7) est de préférence un capteur de présence, un lecteur de code, un capteur optique, tel qu'une caméra.

7. Machine de distribution de boissons (1) selon l'une quelconque des revendications précédentes, dans laquelle la machine de distribution de boissons (1) comprend en outre un réservoir d'alimentation (100) pour alimenter en liquide le trajet d'acheminement (2),
dans laquelle le réservoir d'alimentation (100) peut de préférence être fixé de manière amovible, et/ou
dans laquelle le réservoir d'alimentation (100) peut être raccordé fluidiquement de manière sélective au trajet d'acheminement (2), de préférence par l'intermédiaire de l'entrée (3) lorsque le raccord (6) n'est pas raccordé au trajet d'acheminement (2).

8. Machine de distribution de boissons (1) selon l'une quelconque des revendications précédentes, comprenant en outre des moyens de filtration pour filtrer en amont le liquide à stocker dans le réservoir de stockage (40),
dans laquelle les moyens de filtration sont de préférence raccordés de manière amovible à la machine de distribution de boissons (1), et
dans laquelle le raccord amovible (6) peut raccorder fluidiquement l'unité de distribution (5) et l'entrée (3) uniquement lorsque les moyens de filtration ne sont pas raccordés à et/ou sont retirés de la machine de distribution de boissons (1).

9. Machine de distribution de boissons (1) selon l'une quelconque des revendications précédentes, dans laquelle l'unité de commande est configurée pour activer le processus de nettoyage lors de la détection de l'instruction de nettoyage par le détecteur (7), de préférence à condition que la boucle de circulation fermée (O) soit formée et/ou que le raccord (6) soit raccordé fluidiquement à l'unité de distribution (5), et/ou
dans laquelle l'unité de commande est configurée pour réaliser un processus de distribution de boisson en acheminant du liquide le long du trajet d'acheminement (2) et hors de l'unité de distribution (5), de préférence en commandant la pompe (43, 44).

10. Procédé de commande d'une machine de distribution de boissons (1), comprenant :
• la fourniture d'une machine de distribution de boissons (1) selon l'une quelconque des revendications précédentes,
• la détection d'une instruction de nettoyage par le détecteur (7), et
• l'activation d'un processus de nettoyage sur la base de la détection de l'instruction de nettoyage, dans lequel le processus de nettoyage comprend l'acheminement de liquide le long du trajet d'acheminement (2),
**caractérisé en ce que :**
• le raccordement fluidique d'un trajet de nettoyage (C) au trajet d'acheminement (2) avant d'activer le processus de nettoyage pour obtenir une boucle de circulation fermée (O),
• dans lequel le processus de nettoyage comprend la circulation du liquide à travers la boucle de circulation fermée (O),
dans lequel l'étape de raccordement fluidique du trajet de nettoyage (C) comprend la fixation du raccord amovible (6) pour raccorder fluidiquement l'unité de distribution (5) et l'entrée (3) afin de former la boucle de circulation fermée (O).

11. Procédé selon la revendication 10, comprenant en outre :
• le raccordement fluidique du raccord amovible (6) à l'unité de distribution (5) avant d'activer le processus de nettoyage, et
• la réception du liquide acheminé par le raccord amovible (6) pendant le processus de nettoyage.

12. Procédé selon la revendication 10 ou 11, dans lequel l'étape de mise en circulation du liquide est automatiquement initiée par l'étape de fixation du raccord amovible (6), de préférence par reconnaissance de présence du raccord (6) et/ou reconnaissance de formation de la boucle de circulation fermée (O) et/ou sur la base de ou lors de la lecture d'informations de préférence codées portées par le raccord (6).

13. Procédé selon l'une quelconque des revendications 10 à 12, dans lequel l'étape de mise en circulation du liquide est réalisée pendant une durée prédéfinie et/ou jusqu'à atteindre un niveau de nettoyage prédéfini, et/ou
dans lequel l'étape de mise en circulation du liquide est différée ou mise en pause si ou tant qu'une quantité ou un niveau de liquide dans le trajet d'acheminement (2) et/ou la boucle de circulation fermée (O) et/ou le réservoir de stockage (40) et/ou le raccord amovible (6), tel que l'espace (60), et/ou le trajet de nettoyage (C) est inférieur(e) à une valeur seuil définie.

14. Procédé selon l'une quelconque des revendications 10 à 13, dans lequel l'étape de détection de l'instruction de nettoyage par le détecteur (7) comprend : la détection de la présence du raccord amovible (6) et/ou la détection de la formation de la boucle de circulation fermée (O) et/ou la lecture de l'instruction de nettoyage de préférence sans fil ou de manière optique, par exemple à partir d'un dispositif secondaire tel que le raccord amovible (6) ou un mobile multifonction, dans lequel l'instruction de nettoyage est de préférence stockée dans un code-barres ou une étiquette RFID.

15. Procédé selon l'une quelconque des revendications 10 à 14, dans lequel le processus de nettoyage est activé lors de la détection de l'instruction de nettoyage, et/ou dans lequel le processus de nettoyage est effectué pendant une durée prédéfinie et/ou jusqu'à atteindre un niveau de nettoyage prédéfini.
